# EUROPEAN PATENT APPLICATION

(11) **EP 1 276 070 A1**
(43) Date of publication of application: **15.01.2003**
(21) Application number: 02251490.5
(22) Date of filing: 04.03.2002
(51) Int. Cl.: G06F 17/60

(54) **Finance applying method on electronic commerce system**

(30) Priority: 13.07.2001 JP 2001213033
(71) Applicant: Hitachi Ltd., Tokyo (JP)
(72) Inventor: Kamada, Yoshiharu, c/o Hitachi Ltd., Tokyo 100-8220 (JP); Tomita, Hiroshi, c/o Hitachi Ltd., Tokyo 100-8220 (JP); Yoshida, Takahiro, c/o Hitachi Ltd., Tokyo 100-8220 (JP)
(74) Representative: Calderbank, Thomas Roger

(57) **Abstract**

The exchange of individual progress data for indicating the progress of the electronic-commerce transaction managed by a center site (101) is set as the security target. A seller (130, 131, or 132) creates a financing application including a target transaction set as the security and a suggested financing amount of money, then transferring the financing application to the center site (101). The center site (101) makes an inquiry of a buyer (120, 121, or 122) as to whether or not to approve the disclosure of the applied content to the financial institution (140, 141, or 142). If the inquiry result is the disclosure-capable, the center site (101) transfers, to the financial institution (140, 141, or 142), a financing request together with the progress data, and the suggested financing amount of money. The financial institution (140, 141, or 142), based on the requested content of the financing, makes an examination concerning the financing request, thereby notifying the seller (130, 131, or 132) of the examination result.

## Description

The present invention relates to a system/method for performing a financing application processing from a financing applicant to a financial institution. More specifically, it relates to a system/method for performing the financing application processing with the use of an electronic-commerce transaction system.

From conventionally, there have been many cases where, when a financing applicant tries to receive a financing from a financial institution, the financing applicant submits, as a guarantee of the repayment, a security to the financial institution. As such securities, in addition to a real estate, machinery facilities, and a negotiable instrument, there exists a bill-receivable or the like for promising the reception of a price occurring in an inter-enterprise transaction. The financing applicant prepares, on its own side, materials concerned with the security, then submitting the materials to the financial institution. The financial institution, based on the submitted materials, makes an examination of the financing, then making a reply as to whether or not to provide the financing.

Of the above-described securities, in the inter-enterprise transaction becoming a cause of issuing the bill-receivable, an electronic-commerce transaction system has come into actual use. For example, in JP-A-10-275191, a seller electronically receives the order of a commodity and delivers the commodity, then receiving the commodity's price. At this time, the data associated with these transactions are managed in a one-centralized manner by a host apparatus.

There are some cases where it takes a seller a certain extent of time to perform the following two steps: Delivering a commodity to a buyer from which the seller had received the order and next, receiving, from the buyer, the price of the commodity the delivery of which has been approved (i.e., accepted). In the meantime therebetween, there is a possibility that a lack in the operating fund may occur. Accordingly, in some cases, the seller wishes to receive a financing with a bill-receivable of the delivered commodity's price set as a security or, if the seller has not received the bill-receivable yet, with the uncollected remaining balance set as the security. As described above, in the case of the conventional financing application, the seller needs to prepare, on its own side, the documents or the like that are necessary for the examination. Meanwhile, in the case where the transaction is performed using the above-described electronic-commerce transaction system, the series of processings are performed electronically. As a result, in many cases, records (e.g., printouts or the like) of the electronic exchanges are submitted. At this time, there may occur the case where it becomes necessary for the financial institution to confirm the credibility about the submitted documents, especially about the documents submitted as the security. This may cause the case to happen where the promptness in the examination will be damaged.

The present invention has been devised in view of the above-described background. Accordingly, it is desirable for the present invention to provide a financing application processing method for receiving a financing/lending from a financial institution in a transaction using an electronic-commerce transaction system.

In order to address the above-described aim, the present invention has been configured as follows.

Using a seller-side terminal and a buyer-side terminal wherein the seller and the buyer are members of an electronic-commerce transaction system, the application, the approval, the selection and the like of a financing are electronically performed. The seller-side that applies the financing transfers, to a center site, financing applying information including a target transaction set as the security and a suggested money-amount. Namely, instead of applying the financing to a financial institution, the seller-side applies the financing to the electronic-commerce transaction system. Having received the financing applying information, the center site notifies the buyer-side terminal in the target transaction that such an application has been made. The reason for this notice is that it is undesirable to disclose the transaction content to the financial institution in accordance with a will of the seller alone, i.e., just one of the concerned parties. Having received the notice, the buyer-side confirms its content, then making a reply as to whether or not to approve the disclosure.

Having received the reply to the disclosure approval/disapproval, if the disclosure is approved, the center site transfers, to the financial institution, financing requesting information along with progress data on the target transaction set as the security. Namely, in substitution for the seller-side, the center site makes the financing request to the financial institution. Having received the financing requesting information, the financial institution makes the examination on the basis of the financing requesting information and the progress data. Then, the financial institution notifies the center site of a reply to the financing approval/disapproval, including financing-capable conditions such as a financing-capable money-amount. Having received the reply, the center site notifies the seller-side of the financing approval/disapproval. The seller-side confirms the financing-capable conditions included in the notified financing approval/disapproval, then transferring, to the center site, a decision as to whether or not to receive the financing.

Other objects, features and advantages of the invention will become apparent from the following description of the embodiments of the invention taken in conjunction with the accompanying drawings.
FIG. 1 is a configuration diagram of a financing application processing system;
FIG. 2 is a schematic diagram for illustrating a processing at a center site for managing data received from a member site;
FIG. 3 is a schematic diagram for illustrating a processing in the case where a seller applies a financing from a financial institution 140 via the center site;
FIG. 4 is a diagram for illustrating a processing at the center site 101 for executing a financing application processing program;
FIG. 5 illustrates a financing applying picture displayed in the case where an applicant applies a financing;
FIG. 6 illustrates a picture for approving an asset-data disclosure;
FIG. 7 illustrates a picture for illustrating the details of transaction-related data;
FIG. 8 illustrates a picture for illustrating a financing-requesting situation;
FIG. 9 illustrates a picture for confirming financing requested-content;
FIG. 10 illustrates a picture for deciding a financing applied-target;
FIG. 11 is a diagram for illustrating individual applied matter-cases to be stored into an applied matter-case DB 106; and
FIG. 12 is a diagram for illustrating the details of the transaction-related data stored in a transaction-related data DB.

Hereinafter, the explanation will be given below concerning the embodiments to which the present invention has been applied.

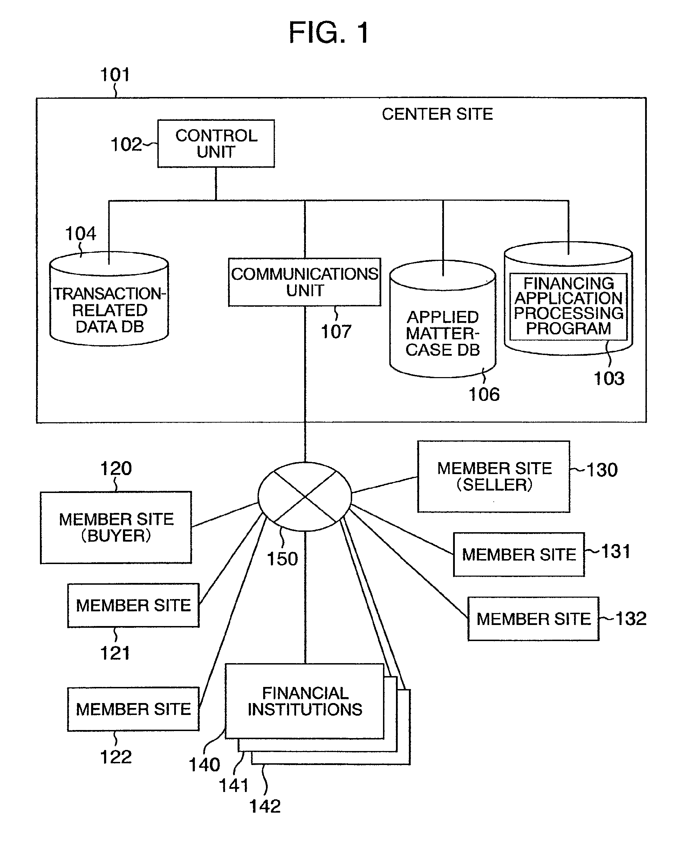

FIG. 1 is a configuration diagram of a financing application processing system according to an embodiment of the present invention. The respective terminals of a plurality of member sites 120-122 and 130-132 are connected to each other via a center site 101 and a network 150. The respective terminals are also connected to terminals of financial institutions 140-142. A communications network, e.g., a LAN, a WAN, or the Internet, can be used as the network 150 for connecting these sites and the financial institutions to each other. The telephone line, a leased line, or the like (regardless of whether the line is wireless or wired) may also be used as the network 150. As the terminals of the member sites and those of the financial institutions, personal computers and workstations can be used which have input apparatuses and display apparatuses and which include the well-known browser soft developed for World Wide Web. Every member site can become either of a seller and a buyer.

The center site 101 has a function of receiving a log-in from a member site so as to mediate a commercial transaction performed between the member sites. The center site, which further has a financing application processing program 103 for performing the processing of a financing application from a member site, executes the program so as to perform a processing that will be explained in detail later. A transaction-related data database (DB) 104 manages data needed for a common commercial transaction, the data ranging from a quotation between the member sites and an order-reception/placing therebetween up to the payment for a commodity's delivery therebetween or the like. An applied matter-case database (DB) 106 manages data for processing the financing application. A control unit 102, which includes a microprocessor forming the central core of, e.g., a general-purpose computer or a workstation, executes the financing application processing program 103 needed for processing the financing application and a program needed for performing the mediation of a commercial transaction or the other processings. A communications unit 107, which is implemented for establishing the connection from the center site 101 to the network 150, is capable of using a router, a modem apparatus, and the like. Incidentally, although, in the present embodiment, the case has been presented where a single center site 101 exists, the processings may be distributed into a plurality of center sites via the network 150.

In the present embodiment, the consideration will be given to the case where the member site 120 playing a buyer's role purchases a commodity from the member site 130 playing a seller's role.

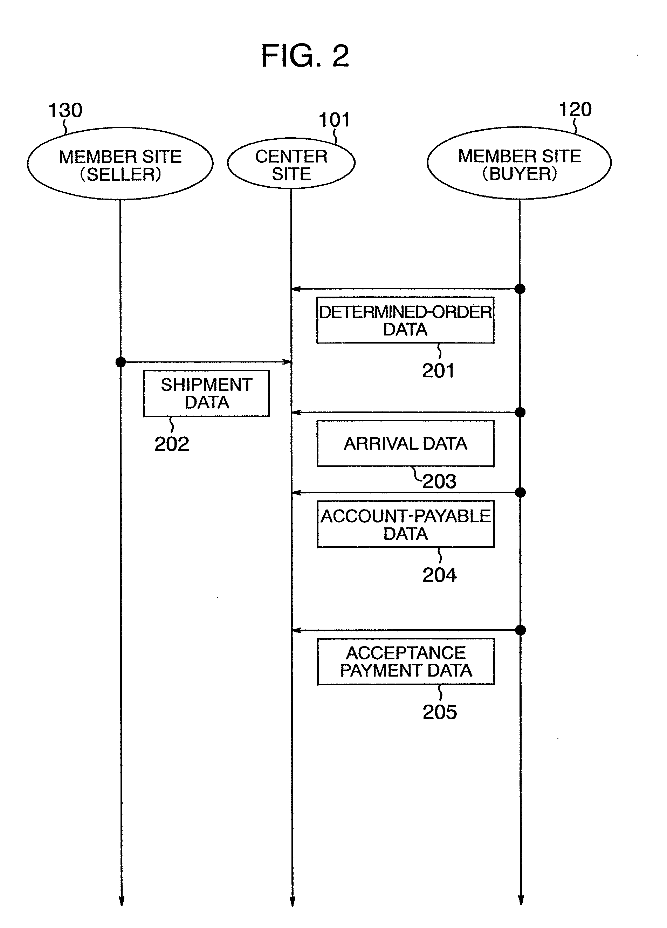

Next, referring to FIG. 2, the explanation will be given below regarding the following processing. The center site 101 that mediates a commercial transaction performed between the member sites manages data received from the member sites, using the transaction-related data DB 104. In FIG. 2, for the purpose of clarifying the relationships between flows of information and flows of time, arrows in a transverse direction indicate the relationships from information-issuing sources to information-transmitted destinations, and arrows in a longitudinal direction indicate the flows of time.

The center site 101, which is basically the same as the system presented in JP-A-10-275191, has commodity information and quotation information. At first, the buyer 120, which has made reference to the commodity information or the like, creates determined-order data 201 including the type, the number/quantity, the unit price, the deadline, or the like of commodities of which the buyer will place an order, then transmitting the determined-order data to the center site 101. The center site 101 registers the determined-order data 201 into the transaction-related data DB 104 and, although not illustrated, notifies the seller 130 that the order-reception has arrived from the center site 101.

Next, when the seller 130 ships the commodities to the buyer 120, the seller 130 transmits shipment data 202 to the center site 101. The center site 101 stores the shipment data 202 into the transaction-related data DB 104. When the shipped commodities arrive at the buyer 120 actually, the buyer 120 transmits, to the center site 101, arrival data 203 for indicating that the ordered commodities have been delivered and thus the reception of the commodities has been confirmed. The center site 101 registers the arrival data 203 into the transaction-related data DB 104. Incidentally, although not illustrated, another configuration is also allowable where the buyer 120 transmits, to the center site 101, acceptance data for indicating that the delivered commodities have been posted onto an account-payable money of the buyer 120.

Next, the buyer 120 transmits, to the center site 101, account-payable data 204 for presenting a detailed-statement of the account-payable money concerning the commodities accepted at the particular transaction. The center site 101 stores the account-payable data into the transaction-related data DB 104.

Finally, after calculating a money-amount to be paid, the buyer 120, based on the account-payable data 204, creates the money-amount to be paid, the paying method, or the like on each posting month basis, then transmitting, to the center site 101, acceptance payment data 205 for notifying the content. The center site 101 stores the acceptance payment data 205 into the transaction-related data DB 104.

In FIG. 2, for the simplicity of the explanation, the explanation has been given regarding the case of the transaction where the commodities are of one type. In the case of actual transactions, however, an order-reception/placing of commodities of plural types is performed in many cases. At this time, there are some cases where the account-payable data 204 and the acceptance payment data 205 indicate a money-amount to be paid for the commodities of the plural types in total on a month-closed basis.

In this way, the transaction-related data needed by the time of the payment completion, e.g., the arrival situation of the commodities, are stored into the transaction-related data DB 104. The determined-order data 201, the shipment data 202 and the arrival data 203, the acceptance data not illustrated, and the account-payable data 204 and the acceptance payment data 205 are common data transmitted/received between the seller and the buyer in the following business-operations, respectively; the order-placing business-operation, the delivery business-operation, the acceptance business-operation, and the payment business-operation. In this way, the data types indicate progress situation of the transaction business-operation as well. Consequently, the seller 130 and the buyer 120 access the center site 101, thereby browsing and reading the data that indicate the progress situation like this, and that are stored in the transaction-related data DB 104. This makes it possible to grasp the progress situation after the contract of the commercial transaction such as the order-reception had been held. Here, the progress situation data are the data needed for a common commercial transaction, the data having been stored by the center site 101 by the time the buyer had placed the order, and the seller transferred the commodities to the buyer, and the seller has completed the reception of the price.

Incidentally, the types of the transaction-related data are not limited to the data used in FIG. 2. Instead, depending on the actual situation of the transaction between the seller and the buyer, the types are arbitrarily settable to, e.g., shipment-due data and pre-delivered data.

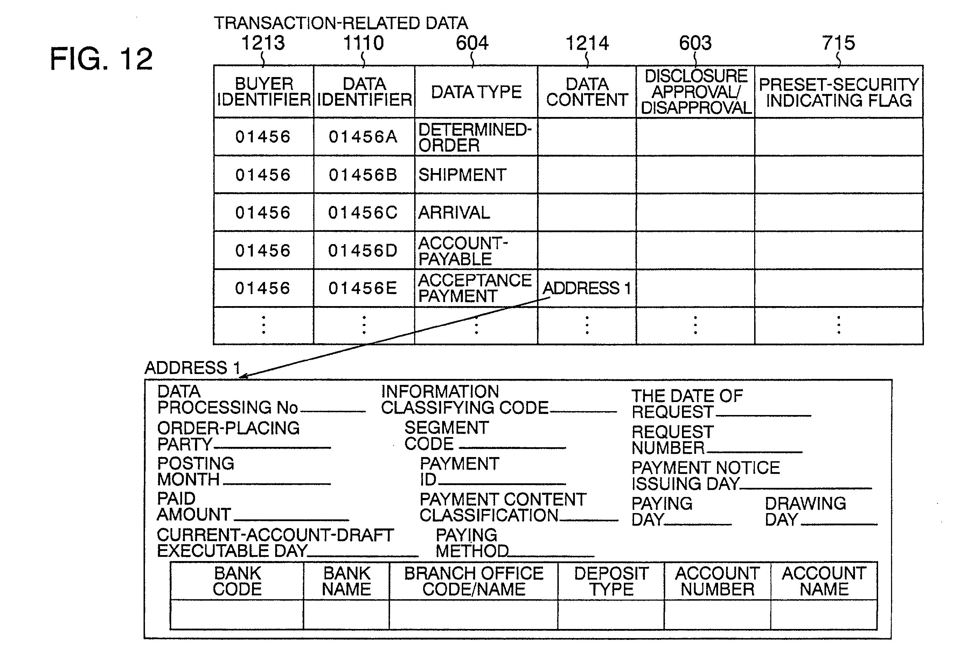

In the electronic-commerce transaction system according to the present invention, the history of a transaction is stored into the transaction-related data DB 104 with an identifier added for each data exchange. FIG. 12 illustrates the details of the stored information.

A buyer identifier 1213 is an identifier for specifying the buyer. A data identifier 1110 is an identifier that, when data is stored, is added to the data for specifying the data. A data type 604, which is the attribute, the type, and the name of data to be stored into the center site 101, refers to the types of the data 201 to 205 in FIG. 2. A disclosure approval/disapproval 603 is a flag for indicating a reply to the disclosure approval/disapproval which, as will be explained later, is made from the buyer 120 to a financial institution of the applicable data. A preset-security indicating flag 715 is a flag for indicating that the center site 101 has registered the fact that the seller 130, i.e., the financing applicant, had decided a financing applied-target. A data content 1214 is a pointer of a data record where the details of the data content are stored. When taking, as an example, acceptance payment data whose data identifier in the drawing is 01456E, the data content indicates that the acceptance payment data has been stored at an address 1. The EIAJ-EDI standard 1999-version data format defined by Electronic and Machinery Industries Association of Japan, i.e., a juridical corporation, such as data processing No., information classifying code, payment content classification, and the like, can be used as the items recorded at the address 1. The items are registered into a specified record area in the transaction-related data DB 104.

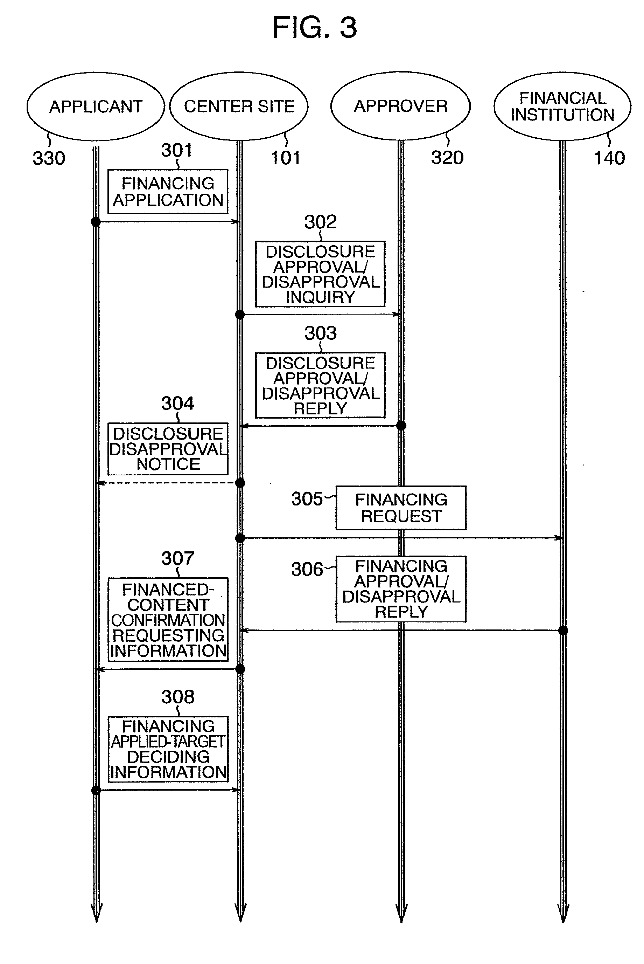

Next, referring to FIG. 3, the explanation will be given below concerning the outline of processing steps ranging from the financing application by a financing applicant 330, i.e., the seller, to the decision of a financing applied-target. The financing applicant 330 selects, from the transaction-related data DB 104, a transaction or data to be set as the security, then transmitting a financing application 301 to the center site 101. The setting as to which data should be set as the security may be performed as required in accordance with, concretely speaking, operation regulations of the center site 101 between the concerned parties of the financing application. Next, concerning the transaction or the data selected by the applicant 330, the center site 101 makes a disclosure approval/disapproval inquiry 302 of an approver 320, i.e., the buyer with which the applicant had performed the transaction. Here, the reasons for making the disclosure approval/disapproval inquiry 302 are as follows. The transaction data is information that is basically secret and that has not been publicized to a third party. Also, it is inappropriate to make the disclosure in accordance with an approval of the financing application 301 by the applicant 330 alone, i.e., just one of the concerned parties. After confirming the transaction, a disclosure target, or the like about which the inquiry has been made, the approver 320 makes a disclosure approval/disapproval reply 303 to the center site 101. If the disclosure approval/disapproval reply 303 is a disapproval, the center site 101 notifies the seller 330 that the reply is the disclosure disapproval notice 304, thereby finishing the processing without notifying the financial institution 140.

Meanwhile, if the disclosure approval/disapproval reply 303 is an approval, the center site 101 acquires, from the transaction-related data DB 104, the data about which the center site has received the disclosure approval reply. Moreover, the center site 101 discloses the applicable data to the financial institution 140 and simultaneously, makes a financing request 305 by using financing requesting information. Having received the financing request 305, the financial institution 140 makes an examination of the application so as to notify the center site 101 of a financing approval/disapproval reply 306 that includes financing conditions or the like. The center site 101 transmits, to the applicant 330, a financed-content confirmation requesting information 307 including the financing conditions offered from the financial institution 140. Furthermore, the applicant 330 transmits, to the center site 101, financing applied-target deciding information 308 on whether or not to receive the financing in response to the financed-content confirmation requesting information 307. This step completes the financing application processing.

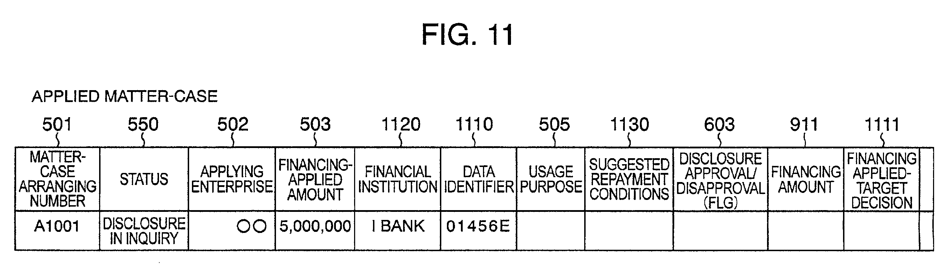

The above-described series of data exchanges concerning the financing application processing are stored into an applied matter-case DB 106 so as to be managed. FIG. 11 illustrates an example of the data structure to be stored into the applied matter-case DB 106. A matter-case arranging number 501 is the number for specifying an applied matter-case. STATUS 550 indicates the present situation leading to the decision of the financing applied-target, such as the reply situation to the financing applied matter-case from the approver 320 and the financial institution 140. For example, when the inquiry is made of the approver 320, "disclosure in inquiry" is written into STATUS. An applying enterprise 502 is the company name (or the factory name) of the applicant 330 that had transmitted the financing application 301. A financing-applied amount 503 is the financing money-amount that the applicant 330 wishes. A usage purpose 505 is a financing-requiring reason or the like that will be described later. A financial institution 1120 is the financing-providing financial institution that the applicant designates. Suggested repayment conditions 1130 are conditions that the applicant designates, e.g., the repayment time-period, the deadline, the interest rate, and the like for performing the repayment of the financing. The data identifier 1110 is the identifier for fetching the applicable data stored in the transaction-related data DB 104. The information mentioned so far are the information included in the financing application 301. A disclosure approval/disapproval (FLG) 603 is the information included in the disclosure approval/disapproval reply 303 and indicating the reply from the approver 320. A financing amount 911 is the information indicated in the financing approval/disapproval reply 306 and indicating a financing-capable money-amount offered from the financial institution 140. A financing applied-target decision 1111 is included in the financing applied-target deciding information 308 and indicates whether or not the applicant has decided to receive the financing in response to the financing conditions offered from the financial institution 140.

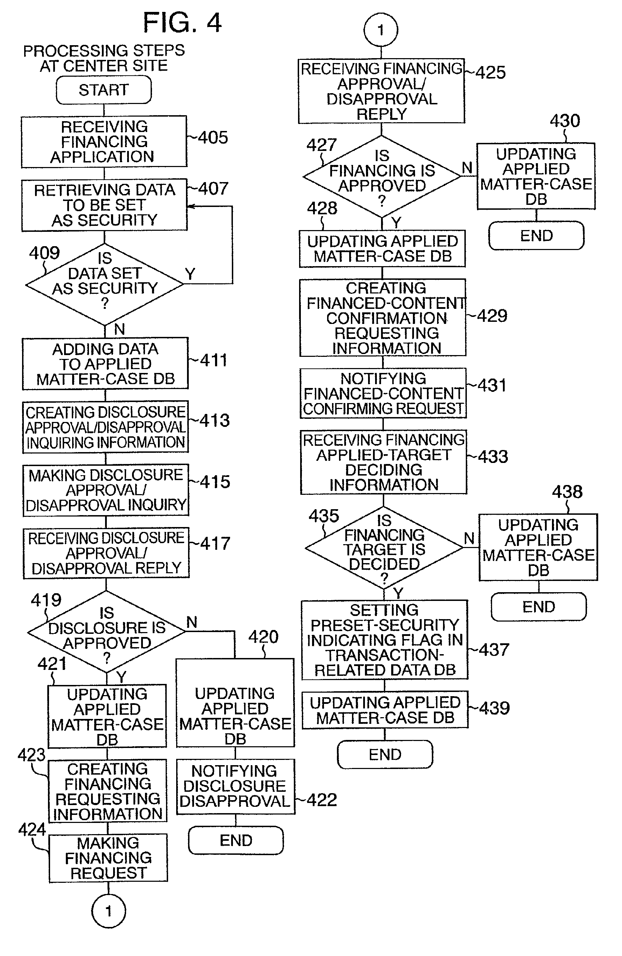

Next, referring to FIG. 4, the explanation will be given below concerning processing steps at which, in the center site 101, the financing application processing program 103 executes the processing steps illustrated in FIG. 3.

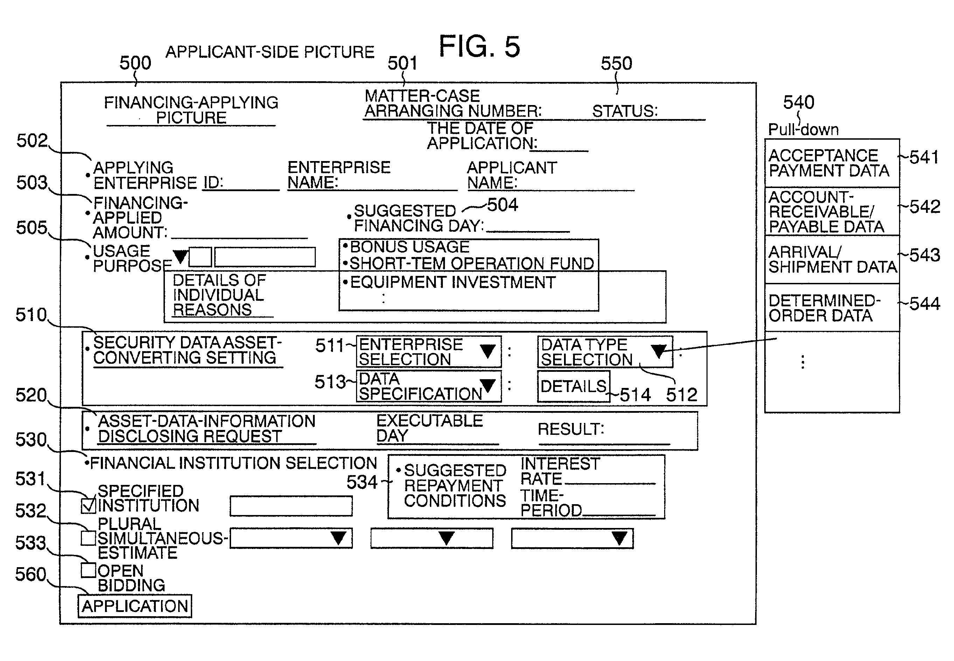

At first, at a step 405, the center site 101 receives the financing application 301 from the financing applicant 330. Referring to FIG. 5, the explanation will be given below regarding an operating picture designed for the applicant 330. A picture 500 is a one displayed in order that the applicant 330 inputs items or the like needed for the financing application 301. The picture 500 is displayed on the terminal of the applicant 330 by the WWW (i.e., World Wide Web) browser soft.

The matter-case arranging number 501 is the number that the center site 101 adds in order to specify this applied matter-case. STATUS 550 indicates the application-processing situation on this applied matter-case. The applying enterprise 502 displays the ID of the applicant 330, the enterprise name thereof, the operating person in charge, or the like. The financing-applied amount 503 is the suggested financing money-amount, which is inputted by the applicant 330. A suggested financing day 504 is a suggested day when the applicant 330 wishes to obtain the financing money. The usage purpose 505 is an area where the applicant 330 is requested to perform the inputting or the selection as to on what purpose the applicant will use the money that the applicant has received. A data asset-converting setting 510 is an area where the applicant 330 is requested to perform the inputting or the selection of a key word or the like in order to select data to be set as the security for the financing. An enterprise selection 511 is the selection of the buyer with which the applicant had performed the transaction. A data type selection 512 allows the applicant to select which data as the security by using Pull-Down 540. As displayed for convenience outside the field of the picture, the details of Pull-Down 540 are determined-order data 544, arrival/shipment data 543, account-receivable/payable data 542, and acceptance payment data 541, i.e., the data that, as explained in FIG. 2, are managed by the transaction-related data DB 104 in the center site 101.

Incidentally, the financing money-amount may also be set under a condition that, depending on the data type selected at the data type selection 512, a specific discount rate has been set to a money-amount becoming the price of an actual commodity (e.g., the financing money-amount for the sales is high in the case of the arrival data, whereas the financing money-amount is low in the case of the determined-order level, or the like). In this case, the center site 101 causes the data types and the discount rates to correspond to each other so as to manage the correspondence therebetween. This makes it possible to calculate the financing money-amount at a discount rate corresponding to a selected data type from the transaction sales amount set by the data asset-converting setting 510. The applicant 330 may decide and input the financing-applied amount 503, or the center site 101 may use the calculated financing money-amount instead of the financing-applied amount 503.

A data specification 513 is a one for specifying the time-period (e.g., the upper-half time-period from January to June) or the time of the data set as the target. There are some cases where, depending on the data types, the lengths of the time-periods differ from each other. For example, in the case of the acceptance payment data 541, the payment of a plurality of commodities is performed on a monthly basis in some cases. Meanwhile, like the determined-order data 544, the order is performed on each commodity basis or on a daily basis in some cases. A details icon 514 is an icon by which, through an instruction or the like by a click with a mouse or a pointing device, the applicant 330 causes the center site 101 to retrieve, from the transaction-related data DB 104, the data corresponding to the above-described inputted key word, and then to display the retrieval result. When the financing application is made and then the disclosure approval/disapproval reply 303 in FIG. 3 is made, the reply's content is displayed on the display area of an asset-data-information disclosing request 520. Accordingly, the asset-data-information disclosing request remains an empty field at the first financing applying stage.

A financial institution selection 530 is an area for allowing the applicant 330 to select a financial institution from which the applicant wishes to receive the financing. There are three methods for selecting the financial institution. A first method is a method of applying the financing to only one financial institution, where the applicant indicates a specified institution 531 by a checkmark and inputs the bank name into the right field. A second method is a plural simultaneous-estimate 532 where the applicant inputs a plurality of bank names. Incidentally, although not illustrated, it is also allowable to cause the specified financial institutions to select whether or not they approve of notifying the respective financial institutions that the applicant has specified the plurality of financial institutions. A third method is a one where, instead of specifying a financial institution, the applicant inputs the financing money-amount, the financing-required day, the suggested financing conditions, the security data, and the like, then awaiting unspecified large-number of financial institutions to reply to the application. The third method is, so to speak, an open bidding 533 of the financing to the financial institutions. Here, the unspecified large-number of financial institutions refer to financial institutions registered in the center site 101 as the financing applied-targets.

The applicant 330 selects, by using a checkbox, the selecting method that the applicant wishes. Additionally, in the case where the financial institution from which the applicant will receive the financing has been already registered in the center site 101 in advance, the configuration is allowable where a checkmark is given in the checkbox as a default, or the display of the financial institution selection 530 is modified or omitted. Namely, the financing application 301 can also be said to be a data-transmitting request for transmitting, to the specified financial institution, the data that the applicant 330 had selected from the transaction-related data DB 104.

Moreover, a suggested repayment condition inputting area 534 is an area for inputting the suggested financing-repayment conditions, e.g., the interest rate, the repayment time-period, and the like.

In this way, after inputting the items necessary for the application, the applicant clicks on an applying icon 560. This click transmits the financing application 301 to the center site 101, thereby completing the applying procedure by the applicant.

Getting back to FIG. 4, the center site 101, after having received the financing application 301, retrieves, from the transaction-related data DB 104, the data that the applicant 330 had selected (a step 407). Moreover, the center site makes reference to a preset-security indicating flag 715 of the applicable data, thereby judging whether or not the data has been already set as the security (a step 409). As the result of this judgment, if the data has not been set as the security ("No" at the step 409), a transaction-related data details picture 700 is displayed on the terminal of the applicant 330.

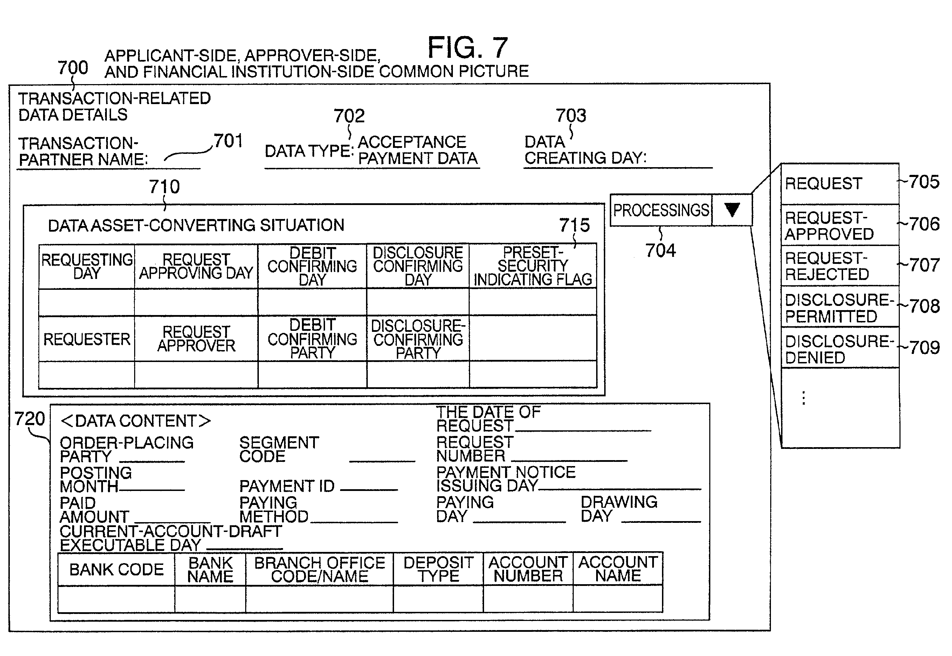

Here, referring to FIG. 7, the explanation will be given below regarding an inquiry operation made by the applicant 330 about the transaction-related data details. The transaction-related data details picture 700 in FIG. 7 indicates one example of the details of the selected data included in the financing application 301 received from the applicant 330 at the step 405. A transaction-partner name 701 displays the buyer selected by the enterprise selection 511 on the financing-applying picture 500 in FIG. 5. A data type 702 displays, for example, the acceptance payment information data selected by the data type selection 512. A data creating day 703 displays the day when the applicable data was created.

A data content displaying area 720, which is an area for indicating the details of the selected data, displays information acquired from the transaction-related data DB 104 and stored into an address destination indicated in data content 1214. A data asset-converting situation displaying area 710 displays the times and dates when the request, the approval, the debt confirmation, and the disclosure confirmation had been performed and the parties that had performed these business-operations. A preset-security indicating flag 715 is a flag for indicating whether or not the applicable data has been already set as the security. After the information like these have been displayed, the applicant 330 selects a request 705 from Pull-Down menus in processings 704. Additionally, in addition to the applicant 330, an applicant-side approver (i.e., the applicant's superior or the like) that will be described later, the buyer-side disclosure approver, the manager of the center site 101, a person of the financial institution, and the like input processings onto the picture in FIG. 7. Consequently, there are prepared menus such as a request-approved 706, a request-rejected 707, a disclosure-permitted 708, and a disclosure-denied 709. Concerning these menus, in order to let the operator select only a processing that the operator can input, a processing that the operator cannot select, for example, can be prevented from being displayed. Here, on the transaction-related data details picture 700, the inputting or the like is possible only at the selection in the processings 704. If the applicant 330 selects the request 705 or the request-approved 706 in the processings 704, at an applying step 411, the matter-case arranging number 501 for specifying the applied matter-case is added to the applied matter-case DB 106. In addition, STATUS 550 for indicating that the applied matter-case is in the disclosure approval/disapproval inquiry, the applying enterprise 502, the financing-applied amount 503, the usage purpose 505, the data identifier 1110, the financial institution 1120 specified by the financial institution selection 530, and the suggested repayment conditions 1130 inputted by the suggested repayment condition inputting area 534, which are included in the financing application 301, are stored into the applied matter-case DB 106 in a state of being caused to correspond to each other. Incidentally, if the data has been already set as the security ("Yes" at the step 409), the processing goes back to the step 405, and the center site 101 receives the financing application 301 again.

Next, the center site 101 creates disclosure approval/disapproval inquiry information (a step 413) and based thereon, notifies the approver 320 of the disclosure approval/disapproval inquiry 302 (a step 415). A picture for inputting the disclosure approval/disapproval is displayed on the terminal of the approver 320.

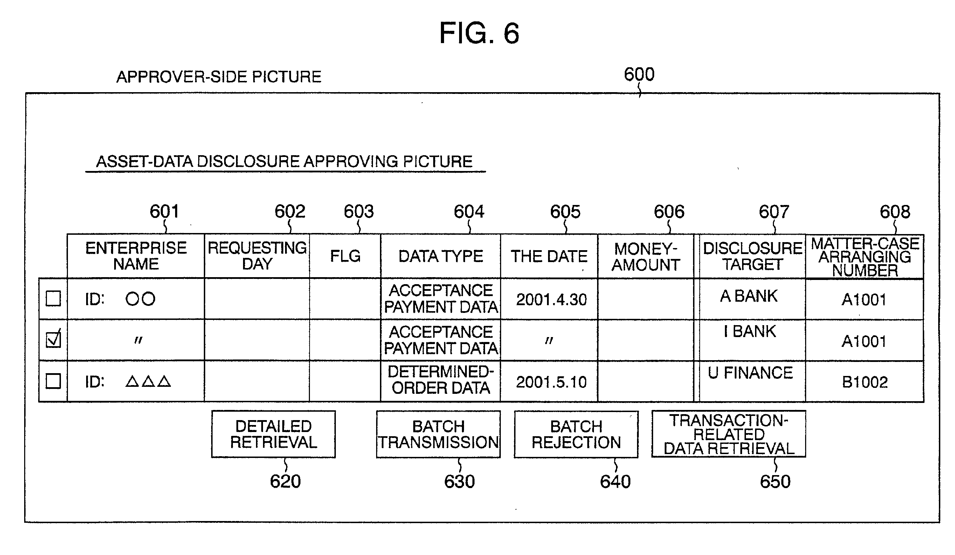

Referring to FIG. 6, the explanation will be given below regarding the picture displayed on the terminal of this inquiry approver 320 (i.e., the buyer 120). The inquired asset-data disclosure approving picture 600 is displayed by, e.g., the WWW browser. This picture indicates an example where an inquiry is made about the data of a plurality of in-batch matter-cases the disclosures of which the approver 320, i.e., the debtor, has been requested to permit. Enterprise names 601 are of financing applicants 330. Requesting days 602 are days when the applicants had made the applications. Data types 604 are types of the data whose disclosures have been requested to permit. The dates 605 are dates when the data had been created. Money-amounts 606 are money-amounts on the transactions and, for example, in the case of the acceptance payment data, indicate paid money-amounts. Here, the money-amounts 606 on the transactions of the applicable data are displayed, whereas the suggested financing money-amount as a whole, which is based on the data and included in the financing application 301, is not displayed. Disclosure targets 607 are financing-providing financial institutions specified by the applicants 330, or financial institutions specified by the center site 101 as the disclosure targets at the auctions. Matter-case arranging numbers 608 are numbers for specifying the applied matter-cases set with the applicable data employed as the securities. Each matter-case arranging number makes reference to and displays the transaction-related data illustrated in FIG. 12. FLGs 603 are flags for indicating whether or not the buyer will give the disclosure permissions. Clicking on a transaction-related data detailed-retrieval icon 650 causes the picture 600 to transition to the transaction-related data details picture 700 in FIG. 7 for displaying the details of the data about which the checkmarks have been given in a checkbox 610.

On this transaction-related data details picture 700, if the approver 320 permits the data disclosures, the approver selects the disclosure-permitted 708 in the processings 704. If not, the approver selects the disclosure-denied 709 therein. Additionally, at this time, the financing applicants 330 are displayed on the requester or the request approver in the data asset-converting situation displaying area 710 in the drawing. The selection of either the disclosure-permitted 708 or the disclosure-denied 709 returns the picture 700 back to the asset-data disclosure approving picture 600, where the FLGs 603 of the applicable data set flags for indicating whether the data disclosures have been permitted or denied. Finally, selecting a batch transmission 630 transmits, to the center site 101, notices for indicating whether or not the disclosures have been permitted in accordance with the flags in the FLGs 603 on the respective data basis. Incidentally, the approver 320 may transmits, to the center site 101, a notice for indicating whether or not the disclosure has been permitted on the basis of each data about which an inquiry had been made.

Getting back to FIG. 4, at a step 417, the center site 101 receives the notice of the disclosure approval/disapproval reply 303 that the approver 320 has made using the display pictures in FIGS. 6 and 7. If the received disclosure approval/disapproval reply 303 is a disapproval ("No" at a step 419), the center site 101 writes the disclosure disapproval into the FLG 603 for indicating the disclosure approval/disapproval on the applicable applied matter-case stored in the applied matter-case DB 106, thereby updating the applied matter-case DB 106 (a step 420). Moreover, the center site 101 notifies the applicant 330 of the disclosure disapproval notice 304 (a step 422), thereby finishing the application processing without making the financing request to the financial institution.

Meanwhile, if, at the step 419, the disclosure approval/disapproval reply 303 is an approval, the center site 101 writes the disclosure approval into the FLG 603 of the applicable applied matter-case stored in the applied matter-case DB 106 (a step 421). Incidentally, although not illustrated, in the case of the disclosure approval reply as well, the center site 101 may notify the applicant 330 of the disclosure approval notice issued by the approver 320.

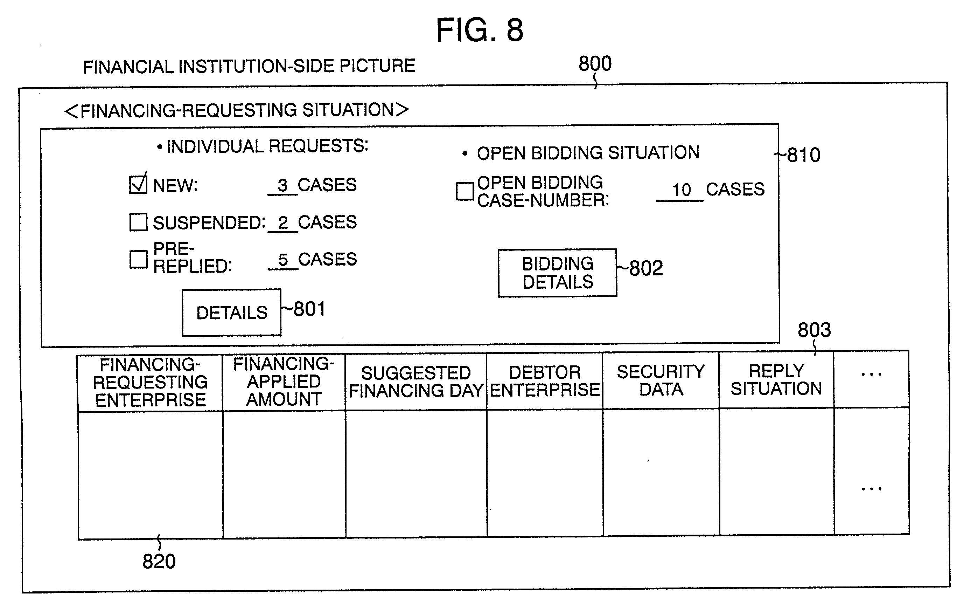

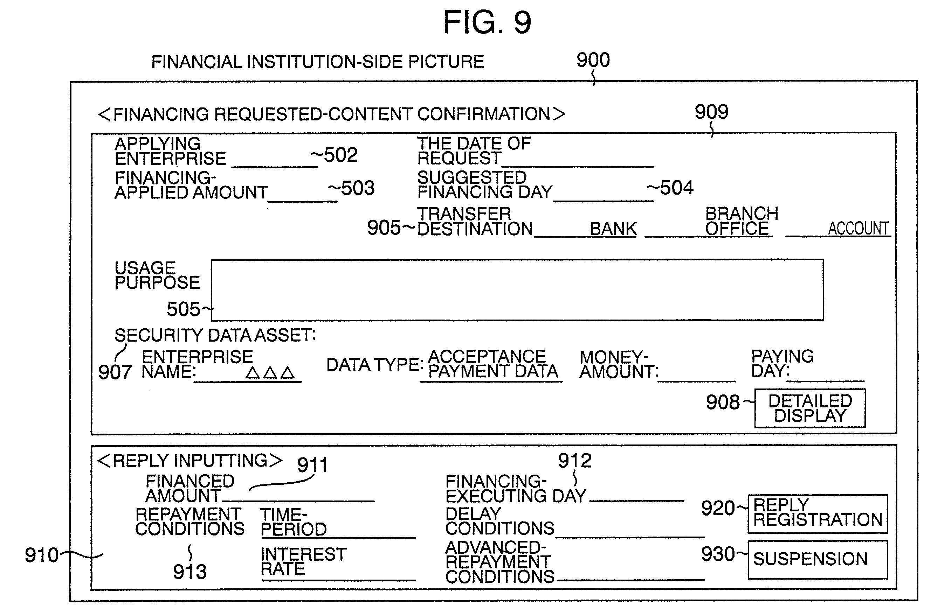

Next, the center site 101 creates the financing requesting information for having the financial institution 140 make the reply thereto (a step 423), thereby making the financing request 305 to the financial institution 140 (a step 424). FIGS. 8 and 9 illustrate the pictures that are displayed at this time at the terminal of the financial institution 140.

FIG. 8 is a financing-requesting situation picture 800 for indicating the financing-requesting situation to the financial institution 140. Since the financial institution 140 logs-in to the center site 101 so as to invoke this picture, the financial institution can display the picture with the use of the WWW browser. A financing-requesting situation displaying area 810, which displays all the financing-requesting cases submitted to the financial institution 140, displays the case-number of the individual requests and the case-number of the open biddings.

When an applicant makes a request to a financial institution specified by the specified institution 531 or the plural simultaneous-estimate 532, the request is added to the individual requests as the case-number. The individual request case-number is displayed on each matter-case basis given as follows: matter-cases whose requests are newly notified, matter-cases to which the replies have been suspended, and pre-replied matter-cases to which the replies have been already made. The open bidding case-number is displayed when the open bidding 533 in FIG. 5 is selected. FIG. 8 displays that there exist 10 financing requests based on the open bidding. A matter-case list displaying area 820 displays the matter-cases that are fetched from the applied matter-case DB 106 and are requested to the financial institution. A financing-requesting enterprise is specified by the applying enterprise 502, and security data is specified by the data identifier 1110 selected by the financing-requesting enterprise in the transaction-related data. A debtor enterprise is specified by the buyer identifier 1213 caused to correspond to the data identifier 1110 in the transaction-related data DB 104. A financing-applied amount and a suggested financing day are displayed by making reference to the financing-applied amount 503 and the suggested financing day 504, respectively. Furthermore, a reply situation 803 displays whether or not the financial institution 140 has finished replying to the center site 101.

Here, if the financial institution 140 wishes to see the details of an individual request matter-case, the financial institution gives a checkmark into a checkbox displayed in the financing-requesting situation displaying area 810, then clicking on a details icon 801. When wishing to see an open bidding case-number, the financial institution clicks on a bidding details icon 802. At this time, in the case where, in FIG. 5, the applicant 330 had performed the setting that it is allowable to notify the financial institution of the selection of the plural simultaneous-estimate, the selection of the plural simultaneous-estimate may be displayed. If the financial institution 140 wishes to know the details of each applied matter-case, clicking on the details icon 801 or the bidding details icon 802 causes the picture 800 to transition to a picture illustrated in FIG. 9 for confirming the financing requested-content so as to input a reply thereto.

FIG. 9 is a diagram for illustrating a financing requested-content confirming picture 900. Making reference to the applied matter-case DB 106 makes it possible to display, in a financed-content displaying area 909 at the upper portion on the picture, the applying enterprise 502, the financing-applied amount 503, the suggested financing day 504, the usage purpose 505, and a security data asset 907 for indicating data selected as the security. These items are the content inputted on the financing-applying picture 500 in FIG. 5. Also, a transfer destination 905 is a financial institution, the branch office name, the account number, or the like into which the financed amount is to be transferred. In the present embodiment, the applicant 330 has specified the transfer destination 905 in advance.

If the financial institution 140 wishes to confirm the details of the security data, clicking on a detailed display icon 908 displays the transaction-related data details picture 700 in FIG 7. Using the terminal, the financial institution 140 confirms the financing request and a debt becoming its security from the data content 720 and the data asset-converting situation 710. Then, getting back to the financing requested-content confirming picture 900 illustrated FIG. 9, the financial institution inputs the reply to this request into the respective items in a reply inputting area 910. The respective items are, concretely, a financed amount 911 into which a money-amount that is financing-capable in response to the financing-applied amount 503 is inputted, and a financing-executing day 912 in response to the suggested financing day 504. These amounts and days do not necessarily coincide with each other. Moreover, the financial institution inputs, if any, repayment conditions 913 such as the repayment time-period and the interest rate.

After inputting the above-described items, the financial institution clicks on a reply registering icon 920. In the present embodiment, if "zero" has been written in the financed amount 911, the reply is assumed to be the financing-incapable financing disapproval reply. Clicking on the reply registering icon 920 registers, into the center site 101, the financing approval/disapproval reply including the financing conditions or the like. Additionally, the reply registering icon for registering the financing approval/disapproval reply may be provided in a state of being divided into a financing-capable icon and a financing disapproval icon. Also, the financial institution, if it performs no reply's inputting and registration, clicks on a suspending icon 930, thereby registering into the center site 101 that the reply has been suspended. Clicking on these icons causes FIG. 9 to transition to FIG. 8, where, depending on the selection of the reply registration and that of the reply suspension, the institution updates the respective case-numbers.

Getting back to a step 425 in FIG. 4, the center site 101 receives, from the financial institution 140, the financing approval/disapproval reply 306 for indicating the financing approval/disapproval. If, at a step 427, the received financing approval/disapproval reply 306 is the financing disapproval reply ("No" at a step 427), the center site writes "zero", which indicates that the financing has been disapproved, into the financed amount 911 in the applicable applied matter-case, thereby updating the applied matter-case DB 106 (a step 430) and finishing the processing. Incidentally, the center site may notify, by a mail, the applicant 330 that the applicant cannot receive the financing. Otherwise, another configuration is also allowable which permits the applicant 330 to confirm the financing approval/disapproval when it logs-in to the center site.

If the received financing approval/disapproval reply 306 is the financing approval reply ("yes" at the step 427), the center site writes the financed amount into the financed amount 911 in the applied matter-case of the applicable data, thereby updating the applied matter-case DB 106 (a step 428). Moreover, the center site creates the financed-content confirmation requesting information 307 that includes, in addition to the financed amount 911, the data inputted into the reply inputting area in FIG. 9 by the financial institution 140 and needed when providing the financing (a step 429). Furthermore, at a step 431, the site notifies the applicant 330 of the financed-content confirming request.

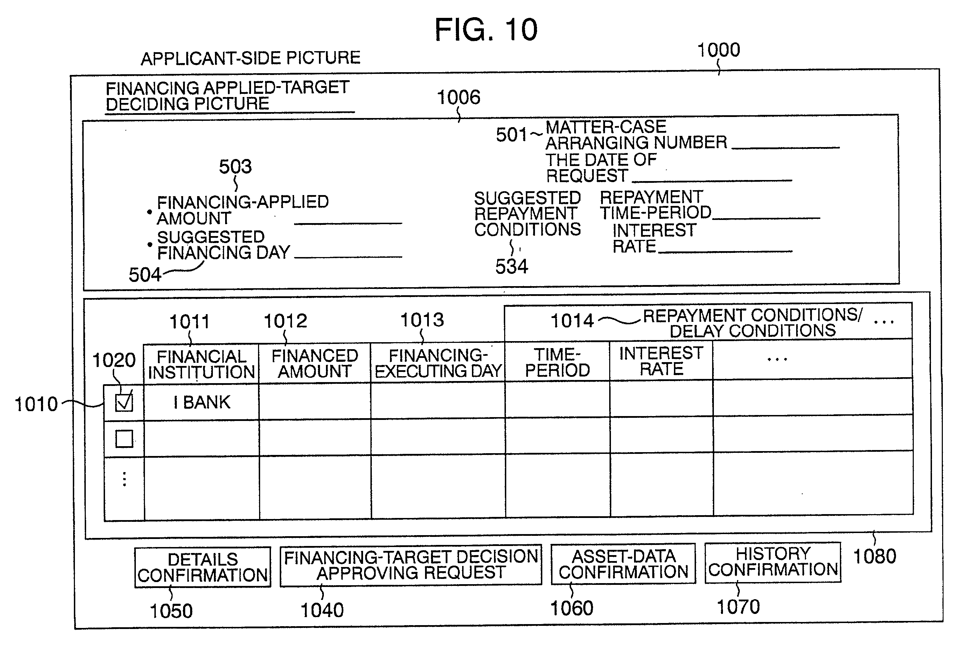

Having received the financed-content confirming request, the applicant 330 makes the confirmation and the decision by using a financing applied-target deciding picture illustrated in FIG. 10. FIG. 10 is the financing applied-target deciding picture 1000 for deciding the financing applied-target in response to the reply to the financing from the financial institution. In an application information displaying area 1006, the applicant makes reference to and displays the matter-case arranging number 501 and the financing-applied amount 503 of the applied matter-case stored in the applied matter-case DB 106. A financing reply displaying area 1080 displays the content inputted into the reply inputting area in FIG. 9 by the financial institution 140. Concretely, there are displayed a financial institution 1011, i.e., the name of a financial institution that has made the financing approval/disapproval reply 306, a financed amount 1012, i.e., a financed money-amount that the financial institution suggests, a financing-executing day 1013 for indicating the day when the financial institution can transfer the money-amount into the applicant's account, repayment/delay conditions 1014 including the repayment time-period, the interest rate, the delay interest, and the like for the financing. These are included in the financing approval/disapproval reply 306.

The applicant 330 gives a checkmark into a checkbox 1020 and selects a details confirming icon 1050. This causes the picture 1000 to transition to the financing-applying picture 500 in FIG. 5 for indicating the details of the applied matter-case registered in the applied matter-case DB 106. On this picture, the applicant 330 can confirm the applied-content. Also, clicking on an asset-data confirming icon 1060 causes the picture 1000 to transition to the transaction-related data details picture 700 in FIG. 7. Clicking on a history confirming icon 1070 makes it possible to confirm the history from the application of the present matter-case to the reception of the financing approval/disapproval reply (the explanation will be omitted concerning its display picture). If the applicant 330 decides to receive the financing in accordance with the content displayed in the displaying area 1080, for example, if the applicant decides to receive the financing from I Bank, i.e., one of the financial institutions 1011, the applicant gives a checkmark into a checkbox 1020 of an applicable financing-target list 1010, then clicking on a financing-target decision approving request icon 1040. This transmits the financing applied-target deciding information 308 to the center site 101.

Getting back to FIG. 4, at a step 433, the center site 101 receives the financing applied-target deciding information 308. If, at a step 435, the financing applied-target deciding information 308 is information that the applicant will receive the financing, the center site sets a flag in the preset-security indicating flag 715 of the transaction-related data in the transaction-related data DB 104 (a step 437), thereby updating the applied matter-case DB 106 (a step 439) and finishing the processing. This flag is a flag for notifying the approver 320, which had made the disclosure approval reply, that the security has been set concerning the applicable transaction. Meanwhile, in the case where the applicant will not receive the financing (the step 435), the processing goes to a step 436. Then, the center site writes the decision of not receiving the financing into the financing applied-target decision 1111 of the applicable matter-case in the applied matter-case DB 106 (a step 438), thereby finishing the processing.

Incidentally, another configuration is also allowable where, after the step 435, the financial institution 140 and the approver 320 will be notified of the decision result.

According to the present embodiment, the seller takes advantage of the data that had been already registered into the center site at the time of the transaction. This condition permits the seller to make the financing application with a smaller-burden, and permits the financial institution to further enhance the promptness in the examination.

Incidentally, if either of the transaction concerned-parties registers a notice to the effect that the transaction will be cancelled, it is allowable to notify the financing applied-target of the notice to the effect.

Although the explanation has been given concerning the present embodiment so far, various types of modifications can be implemented. For example, the disclosure approval/disapproval inquiry 302 in FIG. 3 is confirmed in advance, thereby making it allowable to omit an inquiry on each application basis. Also, in the case of a transaction whose content has been publicized, the data-disclosure approval/disapproval inquiry 302 may be omitted.

Also, the data set as the security for the financing application 301 may be a plurality of pieces of data, and also may be about a plurality of transactions. Furthermore, not all of the buyers are the same, and thus the following configuration is also possible. The disclosure approval/disapproval inquiry 302 is made of a buyer on each transaction basis and, depending on the each-buyer-basis disclosure approval/disapproval reply 303 in response thereto, the financing applied-content is changed.

Also, in the present embodiment, the communications method by which the center site 101 requests a confirmation, an approval, and the like toward the applicant 330, the buyer 120, and the financial institution 140 may be any one of the following: an active communications method of notifying a notice by a mail, a passive communications method where, when the applicant, the buyer, the financial institution, and the like log-in to the center site, the details thereof are displayed on the terminals that they utilize, and another communications method.

Also, the following configuration is possible: Instead of making the financing application to the center site 101, the applicant 330 makes the application to the financial institution 140 via the network 150, and the financial institution 140 receives the application and then requests the disclosure of the transaction-related data to the center site 101.

The present invention makes it possible to provide the financing application processing method that exhibits a high-efficiency from a financing application to the reply thereto.

It should be further understood by those skilled in the art that the foregoing description has been made on embodiments of the invention and that various changes and modifications may be made in the invention without departing from the spirit of the invention and the scope of the appended claims, as interpreted by the description and drawings.

## Claims

1. A financing application processing method in an electronic-commerce transaction system where a seller-side (130, 131, or 132) terminal that applies a financing, a buyer-side (120, 121, or 122) terminal that establishes a transaction with said seller-side (130, 131, or 132), and a center site (101) that stores progress data on said transaction are connected to each other via a network (150), comprising the steps of:
said seller-side (130, 131, or 132) terminal transferring, to said center site (101), financing applying information including a target transaction set as a security and a suggested money-amount;
said center site (101) that receives said financing applying information making an inquiry (302) of said buyer-side (120, 121, or 122) terminal of said target transaction about a disclosure approval/disapproval of said progress data to a terminal of a financial institution (140, 141, or 142) connected to said network (150);
said buyer-side (120, 121, or 122) terminal receiving an input of said buyer (120, 121, or 122) so as to transfer, to said center site (101), said disclosure approval/disapproval in response to said inquiry (302); and
said center site (101) that receives said disclosure approval/disapproval, in a case of receiving a disclosure approval, transferring, to said terminal of said financial institution (140, 141, or 142), financing requesting information along with said progress data and said suggested money-amount.

2. The financing application processing method as claimed in Claim 1, wherein said center site (101), in a case of receiving a disclosure disapproval of said progress data, notifies said seller-side (130, 131, or 132) terminal that said financing application is disapproved.

3. The financing application processing method as claimed in Claim 1, wherein
said progress data includes an identifier for indicating whether or not said transaction is preset as said security; and
said center site (101), in a case where said identifier indicates that said transaction is preset as said security, notifying said seller-side (130, 131, or 132) terminal that said applying information can not be received.

4. The financing application processing method as claimed in Claim 1, wherein
said applying information includes a specification of said financial institution (140, 141, or 142); and
said center site (101) transferring said financing requesting information to said terminal of said specified financial institution (140, 141, or 142).

5. The financing application processing method as claimed in Claim 1, wherein
said financial institution (140, 141, or 142) transfers, to said center site (101), an approval/disapproval of said financing in response to said financing requesting information; and
said center site (101) that receives said approval/disapproval of said financing transfers said approval/disapproval of said financing to said seller-side (130, 131, or 132) terminal.

6. The financing application processing method as claimed in Claim 1, wherein
said terminal of said financial institution (140, 141, or 142) transfers, to said center site (101), a financing-capable money-amount in response to said financing requesting information; and
said center site (101) that receives said financing-capable money-amount transferring said financing-capable money-amount to said seller-side (130, 131, or 132) terminal.

7. A financing application processing method in a center site (101) that is connected via a network (150) to a seller-side (130, 131, or 132)-side terminal applying a financing and a buyer-side (120, 121, or 122) terminal establishing a transaction with said seller-side (130, 131, or 132), wherein
said center site (101)
has a database for storing progress data on said transaction;
receives financing applying information including a target transaction set as a security and a suggested money-amount;
makes an inquiry (302) of said buyer-side (120, 121, or 122) terminal of said target transaction about a disclosure approval/disapproval of said progress data to a financial institution (140, 141, or 142); and
in a case of receiving a disclosure approval for said inquiry (302) from said buyer-side (120, 121, or 122)side terminal, transfers, to said financial institution (140, 141, or 142), financing requesting information along with said progress data and said suggested money-amount.

8. The financing application processing method as claimed in Claim 7, wherein, in a case of receiving a disclosure disapproval in response to said inquiry (302), said center site (101) notifies said seller-side (130, 131, or 132) terminal that said financing application is disapproved.

9. The financing application processing method as claimed in Claim 7, wherein
said progress data includes an identifier for indicating whether or not said transaction is preset as said security; and
in a case where said identifier indicates that said transaction is preset as said security, said center site (101) does not perform said inquiry (302) to said buyer-side (120, 121, or 122) terminal, and notifies said seller-side (130, 131, or 132) terminal that said financing can not be received in response to said applying information.

10. The financing application processing method as claimed in Claim 7, wherein
said received applying information includes a specification of said financial institution (140, 141, or 142); and
said financing requesting information is transferred to said specified financial institution (140, 141, or 142).

11. The financing application processing method as claimed in Claim 7, wherein
said center site (101) receives an approval/disapproval of said financing in response to said financing requesting information; and
said center site (101) transfers said approval/disapproval information of said financing to said seller-side (130, 131, or 132) terminal.

12. The financing application processing method as claimed in Claim 11, wherein, in a case of receiving an approval of said financing along with a financing-capable money-amount, said financing-capable money-amount is transferred to said seller-side (130, 131, or 132) terminal.
